# EUROPEAN PATENT APPLICATION

(11) **EP 2 034 443 A1**
(43) Date of publication of application: **11.03.2009**
(21) Application number: 07301344.3
(22) Date of filing: 06.09.2007
(51) Int. Cl.: G06T 11/00

(54) **Method and apparatus for processing video data using cartoonization**

(71) Applicant: Thomson Licensing, 92100 Boulogne-Billancourt (FR)
(72) Inventor: Zhu, Lihua, 100085 Beijing (CN); Zhang, Hui, 100085 Beijing (CN); Yang, Jiheng, 100085 Beijing (CN); Wang, Charles, 100085 Beijing (CN)
(74) Representative: Rittner, Karsten

(57) **Abstract**

Important issues to be considered with respect to video data are bandwidth consumption and video quality, which greatly affects the attraction to the end user. For an optimization of both, there is a need to differ between unimportant and important detail information in videos, and to preserve the important while discarding the unimportant detail information. One solution is video cartoonization. A method for processing video data comprises edge processing a received image and overlaying the edge processed image to the received image, wherein the video data are cartoonized. A respective cartoonization device can be widely used, for example within monitoring systems, broadcast systems, video transmitters, video receivers and others.

## Description

### Field of the invention

This invention relates to a method and an apparatus for processing video data, wherein cartoonization is used.

### Background

For transmission and application of video data there are two important issues to be considered: bandwidth consumption, which measures the amount of data per time unit, and video quality, which greatly affects the attraction to the end user. Video data may be transmitted within a system, such as a monitoring system or storage system, or broadcasted via a network such as the Internet, LAN, mobile network, etc. High quality video is usually considered to be as photo-realistic as possible. Thus, due to more detail information the higher quality video data costs more bandwidth, resulting in increased system cost.

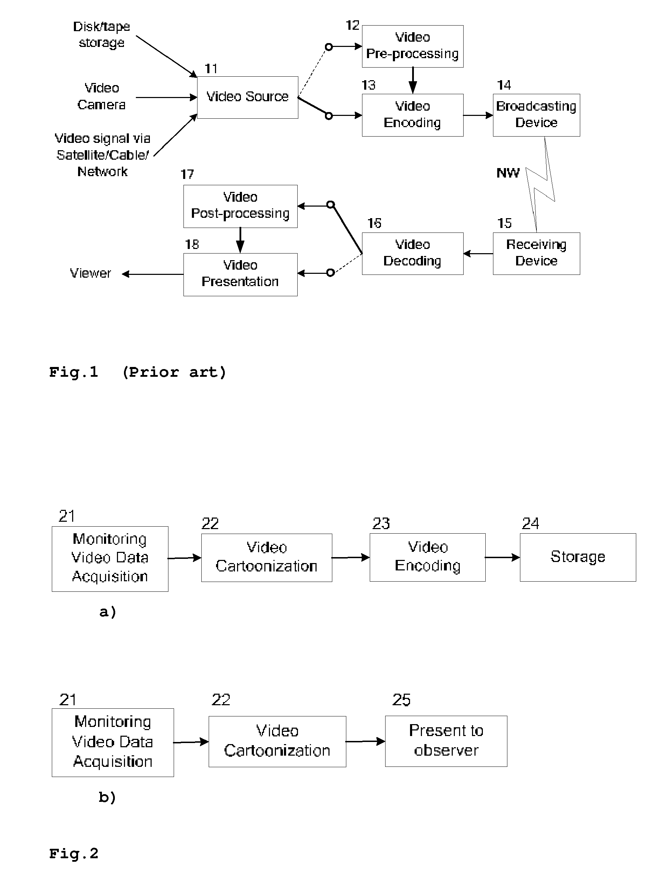

A general architecture for video broadcasting systems is shown in Fig.1. Such video broadcasting framework is commonly employed in various applications, such as video conferences, Internet TV, mobile TV, or online computer games. Although these broadcasting systems vary greatly from one to another, almost all of them share the general architecture shown in Fig.1: the video data coming from a video source 11 may optionally be pre-processed 12, and then are encoded 13 and sent 14 via a network NW. After reception at a receiver 15, the received data is decoded 16 and presented 18 to the viewer, wherein the data may be post-processed 17 before presentation.

Automated video monitoring such as video surveillance or traffic monitoring is an important research area e.g. in military, public security etc. Surveillance cameras are already prevalent in commercial establishments, with camera output being monitored by human observers in real time, and/or recorded to HDD or tapes that are either rewritten periodically or stored in video archives. Some automatic or semi-automatic analysis and notification modules may be integrated to help the human. Real-time monitoring makes immediate response possible (e.g. stopping the crime, saving people from a traffic accident), while the video storage keeps track of the events for future actions (e.g. finding a robber). Technology has reached a stage where mounting cameras to capture video imagery is cheap, but the storage of recorded video data and employment of human resources to sit and watch the video material is expensive.

However, monitoring systems usually collect huge amounts of video data, costing much storage space. Video compression technology can be employed to greatly reduce required storage space, but traditional compression algorithms such as MPEG-1/2/4, H.264/AVC etc. are lossy, i.e. they will discard high-frequency information to achieve coding efficiency. The lost high-frequency information comprises scene detail that is not so important for monitoring purposes, e.g. background structure, but also important visual information which is critical for the monitoring purpose, e.g. car license plates or human facial features. This important information will easily be lost by conventional compression.

Moreover, there is a trend towards using small displays within mobile devices, while the video scenes tend to become more complex due to the parallel availability of large displays. Therefore, it is sometimes difficult and tiresome to watch video material on small displays.

### Summary of the Invention

There is a need to differ between unimportant and important detail information in videos, and to preserve the important while discarding the unimportant detail information.

Video pre-processing and video post-processing give some possibility to improve video quality for a given bandwidth consumption.

The present invention uses the cartoon-like style video processing technology, called "video cartoonization" herein, for video pre/post processing and applies it to natural video. This creates revolutionary visual appearance from the natural video, thus is helpful in various aspects, e.g. for retaining observer attentions. It also has the advantage of preserving crisp edges while smoothing out scene details, and is thus helpful for keeping important visual information while achieving high compression efficiency. Due to the cartoonization, the resulting video is not completely photo-realistic but appears more or less in a cartoon style. The cartoonization technology can be employed for natural video, e.g. in video monitoring systems, broadcasting systems and the like.

According to the invention, cartoonizing is applied to natural video data coming from a conventional video source, such as a video camera or video storage. Cartoonizing includes edge detection and processing/emphasis as well as overlaying the processed edges to the original video in order to emphasize edges in the resulting video. It may further include smoothing of relatively large areas of similar texture, e.g. by adaptive smoothing thresholds.

This has the effect that the amount of video data is reduced, and therefore the data require less storage space or transmission bandwidth respectively.

Another advantage is that it is easier to recognize the cartoonized video data when rendered onto a small display, since important features of the images are emphasized.

In one embodiment, the cartoonization procedure comprises determining a feature map of the input image, and edge processing the input image under guidance of the feature map. Through guidance of the feature map the processing of real edges is ensured while processing of artificial edges is avoided. This results in improved edge processing.

According to one aspect of the invention, a method for processing video data, wherein the video data are being cartoonized, comprises the steps of edge processing a received (usually natural) video image and overlaying the edge processed image to the received image.

According to another aspect of the invention, a method for processing video data comprises the steps of receiving video data from a video data source and cartoonizing the video data, wherein the following steps are performed:
determining a feature map of a received video image, edge processing the received image under guidance of the feature map, and overlaying the edge processed image to the received input image.

According to yet another aspect of the invention, a device for processing video data, wherein the video data are being cartoonized, comprises processing means for edge processing a received video image (usually a natural video image) and means for overlaying the edge processed image to the received image.

According to yet another aspect of the invention, a device for processing video data comprises
receiving means for receiving video data from a video data source and processing means for cartoonizing the video data, wherein the processing means has at least means for determining a feature map of a received video image, means for edge processing the received image under guidance of the feature map, and means for overlaying the edge processed image to the received input image.

In one embodiment, determining the feature map comprises determining a saliency map, determining a skin-colour map, and combining the saliency map and the skin-colour map. By help of the skin-colour map and the saliency map, important real edges which are salient and/or limit regions of interest (ROIs) can be processed differently. This helps retaining real edges while avoiding artificial edges.

In one embodiment, the cartoonization further comprises abstracting the input image and quantizing a combined image under guidance of the feature map, wherein edge processing is used. Edge processing comprises detecting edges in the input image and forming the combined image by overlaying the abstracted image and the edge detected image, e.g. under guidance of the above-mentioned feature map.

This results in a visually attractive cartoon image, which is better recognizable on small displays. Overlaying is achieved by multiplying a pixel value in the abstracted image with the value of the respective pixel in the edge detected image. This is advantageous for parallel processing. Further, since the overlaid pixels of the original video are replaced by the binary edge pixels, the total amount of video data is reduced.

Advantageous embodiments of the invention are disclosed in the dependent claims, the following description and the figures.

### Brief description of the drawings

Exemplary embodiments of the invention are described with reference to the accompanying drawings, which show in
- Fig.1: a conventional video transmission system;
- Fig.2: cartoonization within a video monitoring system;
- Fig.3: cartoonization at data acquisition side within a broadcast system;
- Fig.4: cartoonization at receiver/observer side within a broadcast system;
- Fig.5: cartoonization within a controlling server;
- Fig.6: a video broadcasting system using post-processing for cartoonization;
- Fig.7: a video broadcasting system using pre-processing for cartoonization;
- Fig.8: separate processing of low-frequency and high-frequency information at the transmitting side of a video broadcasting system; and
- Fig.9: a comparison of natural vs. cartoonized visual appearance.

### Detailed description of the invention

Fig.2 shows two exemplary embodiments of video systems that use cartoonization. In Fig.2 a), video data coming from a video data acquisition unit 21 are cartoonized 22. The cartoonized data are conventionally encoded 23 and stored 24. Due to the data reduction achieved by cartoonization, less storage space is required than for conventional video.

One exemplary application is a monitoring system that stores the video data coming from a surveillance camera for later evaluation. This is particularly advantageous for surveillance systems that monitor frequently changing scenes, such as underground or railway stations, traffic etc. As mentioned above, traditional compression algorithms discard high-frequency information, even if it is critical for the monitoring purpose. The present invention however emphasizes important high-frequency information, thus in principle reducing the frequency (because the remaining thin edges become thicker), so that this information is not lost during the further compression steps. A common characteristic for such important visual information is that it is recognizable with crisp edges such as the text boundary of car license plates and the facial feature boundaries. Thus, it will be greatly beneficial that the important visual information such as crisp edges can be preserved while the unimportant scene details are smoothed out.

In Fig.2 b), the cartoonized data are directly presented 25 to an observer. It is advantageous that the processed video is more interesting for the viewer than unprocessed video: therefore cartoonization will help the observer to retain concentration, while the important visual features still remain visible in the content. Thus, a respective monitoring system is technically superior to conventional monitoring systems. As a combination of these two embodiments, an improved monitoring framework having integrated video cartoonization 22 technology, presentation means 25 to an observer, encoder 23 and storage means 24, can generate attractive appearance to retain observer's attention, keep the important information in the monitoring video for higher compression efficiency, and results in reduced storage cost.

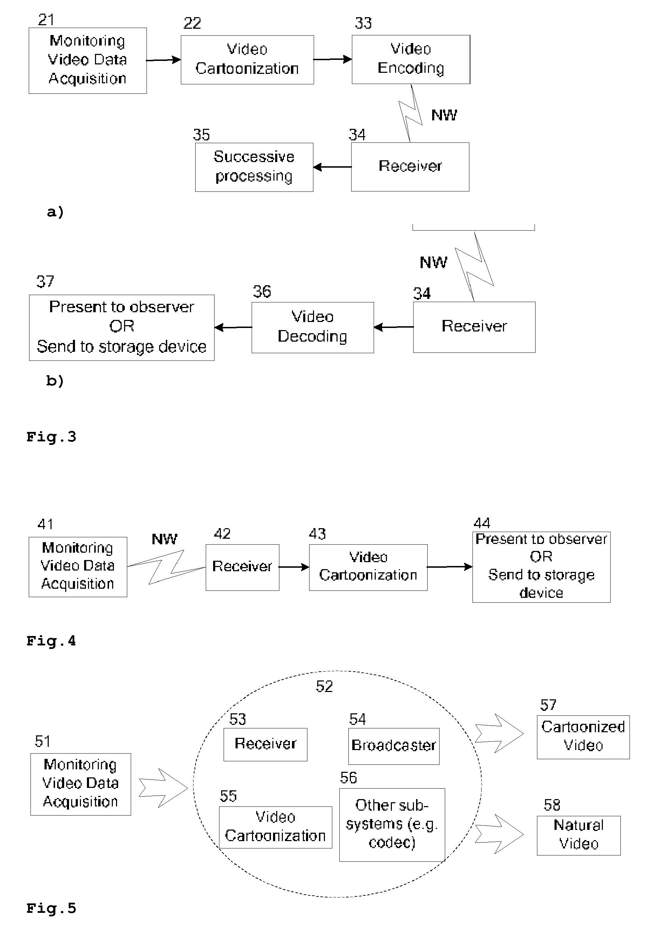

Figs.3 and 4 show embodiments wherein the video is transmitted e.g. via a network NW or generally a bandwidth limited interface. As shown in Fig. 3, the cartoonization 22 may be done at data acquisition side, e.g. when network/ transmission bandwidth is critical. At the receiving side, the cartoonized data may be generally further processed 35, as in Fig.3a), e.g. decoded 36 and presented 37 to an observer as in Fig. 3b).

The cartoonization can also be done at the receiver/ observer side, as shown in Fig. 4, if bandwidth is not an issue and/or the data acquisition device has not the computational power for performing video cartoonization.

Another advantage of this embodiment is that the video data stream transmitted through the bandwidth limited interface NW may be used by conventional display devices as well as devices that have integrated post-processing means for cartoonization 43. In one embodiment, the device may switch between displaying cartoonized video and displaying natural video. In one embodiment, a receiver/display device has means for switching on/off a cartoonization unit. In one embodiment, parameters of the cartoonization unit of such device may be controlled by user input, and in one embodiment these parameters are automatically set by the receiver/display device according to reception quality, display quality or other technical features. These parameters may comprise e.g. quantization parameters for the smoothing, edge detection susceptibility and others. Thus, it is possible to switch on/off the cartoonization module automatically or manually, and/or to regulate a degree of cartoonization automatically or manually by adjusting the respective parameters. As a result, the video appears more photo-realistic for a lower degree of cartoonization, or less photo-realistic and more animated/ sketch-like for a higher degree of cartoonization.

As shown in Fig. 5, a further choice is that the cartoonization is done at a controlling server 52, which can be considered as being part of a network and can physically be centralized or distributed. The server 52 comprises a receiving unit 53, a video cartoonization unit 55, other subsystems 56 such as a codec and a broadcasting unit 54. Thus, it is e.g. possible that a server 52 connected to the Internet receives data from a video data acquisition unit 51, and outputs encoded natural video 58 as well as cartoonized video 57, which may also be encoded.

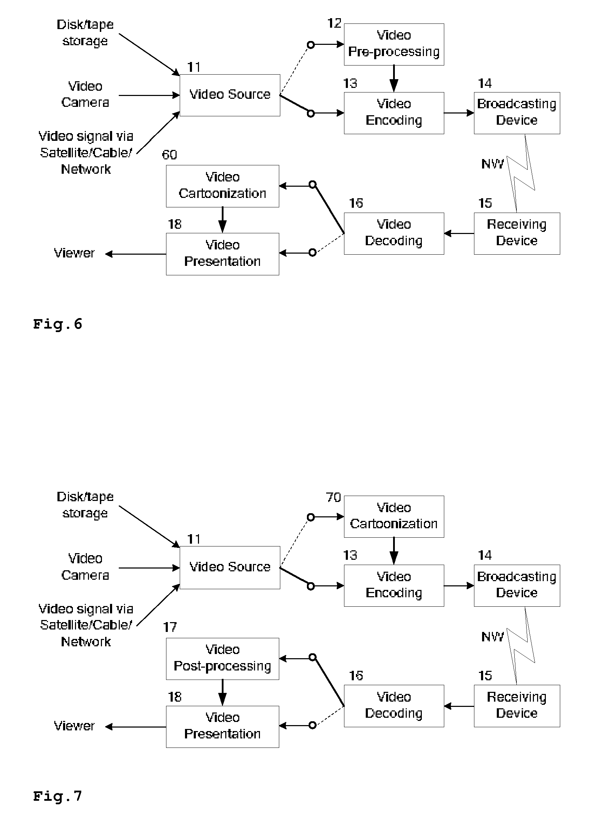

Fig.6 shows another embodiment being a general broadcasting system for video data. The input video data that come e.g. from a disc/tape storage, video camera or via satellite, cable or network, are provided by an input unit 11 to either an optional video pre-processing unit 12 or to a video encoding unit 13. The optional video pre-processing unit 12 delivers the pre-processed data to the video encoding unit 13. The encoded video data are provided to a transmitting or broadcasting unit 14, which feeds them into a network NW. Depending on the connection type (unicast or broadcast), one or more receivers may receive the signal. A receiver has a receiving unit 15, a video decoding unit 16 and video presentation means 18 for presenting the video to a viewer. According to one aspect of the invention, a receiver may have a video post-processing unit 60 that performs video cartoonization. This unit gets decoded video data from the video decoding unit 16, performs cartoonization as described above, and provides the cartoonized video data to the video presentation means 18.

In one embodiment of the invention, one or more parameters of the cartoonization unit of a receiver/display device may be controlled by user input, and in another embodiment the parameters are automatically set by the receiver/display device according to reception quality, display quality, display size or other technical features of the receiver, the display or the connection, or pre-set user preferences.

Advantageously, the receiver may present the conventionally transmitted video in a cartoon-like style, thus giving users new visual experiences and making the images easier to recognize, particularly on small displays. Furthermore, by smoothing out details, the encoding of the cartoonized video saves bandwidth greatly, averaging 40%, with similar subjective video quality, compared to the encoding of the original video. This is advantageous for devices that comprise e.g. means for storing the cartoonized video, or means for transmitting the decoded, cartoonized video over a bandwidth limited interface, such as a wireless local video interface, towards a display device. Moreover, there is no need for a broadcaster to provide separate cartoonized data.

Another exemplary broadcasting system is shown in Fig.7. In this embodiment the video cartoonization is performed at the broadcaster side. A video cartoonization unit 70 is employed that performs pre-processing of the video data before encoding, so that the amount of data to be encoded and to be transmitted is reduced. This architecture has several advantages. First, it enables very simple receiver devices, since video cartoonization may be too complex for low-end devices. The described embodiment of the invention enables very simple low-end video receivers. Second, the source data used for video cartoonization is not degraded by the lossy encoding/decoding and has therefore higher quality, which greatly affects the cartoonized video quality. The receiver device may be conventional, though optionally post-processing 17 may be performed. The post-processing may be conventional, but it may also intensify the cartoonization effect using the previously described techniques, e.g. due to user preferences.

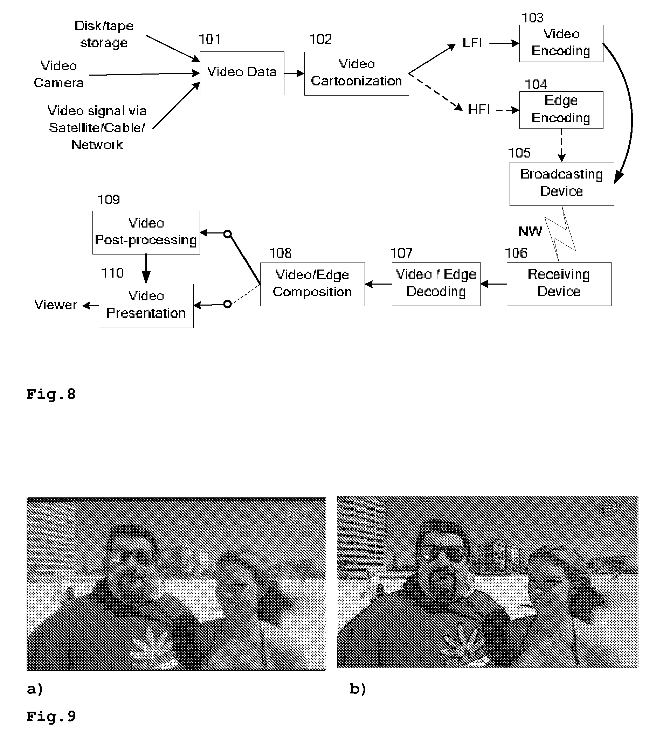

We found that two kinds of visual effect are most critical for the cartoon style: smoothing and edge amplification. Smoothing includes the smoothing or flattening of detailed visual information for some areas (e.g. the human face or skin, sky area etc.). This is low-frequency information, below an (adaptive) threshold. For edge amplification, edge processing strengthens crisp edges for the visually salient boundary areas, e.g. the boundary of the face and facial features, which is high-frequency information. According to one aspect of the invention, the low-frequency and the high-frequency information can be processed separately, as shown in Fig.8. Different encoding methods can be selected for the different data types to maximize the compression efficiency. Though Fig.8 shows exemplarily cartoonization at the transmitter/broadcaster side, it may also be done at the receiver side (with the above-mentioned consequences).

After the video data are acquired 101 and cartoonized 102, low-frequency information LFI is separated from high-frequency information HFI, which largely corresponds to emphasized edges that should be visible. Edge encoding 104 is performed on the high-frequency information portion, while the low-frequency information portion is separately encoded 104 e.g. by conventional encoding. Then the encoded low-frequency information portion and the edges are transmitted 105 via a network (or any other channel) NW.

Then at the receiver side, they are decoded and composed to recover the cartoonized video. Besides higher compression efficiency, this architecture also offers more flexibility. E.g. the low-frequency and high-frequency information may be multiplexed to be transmitted in one channel, or separate in two channels. And if the bandwidth is limited, the high-frequency information may be not transmitted. Also, the receiver side may decide whether to receive the high-frequency information and how to utilize it, e.g. post-processing on the received video/edge respectively, employing other video/edge composition algorithm for impressive effects etc.

Fig.9 shows exemplarily a comparison between natural video and cartoonized video images. The cartoonized video has the processed edges overlaid to the original video. Further, in this example the larger areas are smoothed out, i.e. colour range and/or brightness range is reduced by quantization.

In the following, more information is given about the cartoonizing process that may be used in an embodiment of the invention. The cartoonizing may comprise abstracting a current image frame temporally by help of an adjacent image frame. Abstracting an image frame in the temporal domain cartoonizes and smoothes the appearance of the image frame sequence, resulting in less flickering and less artefacts.

Several edge detection algorithms can be used for the edge processing, e.g. Sobel, Laplace, Canny, Difference-Of-Gaussians etc. In one embodiment, the canny operator is used since it is often considered as the optimal edge detector. It can link small edges together with adaptive thresholds. These edges are then amplified. Noise might still exist after the previous steps. In this case, small areas of edge points can be eliminated using morphological operations, i.e. opening. Applying morphological filtering on each image separately produces flickering, as many edge features appear and disappear at every frame, producing noticeable "popping" artefacts. To reduce them, the morphological structure element is extended into the temporal domain. The 3D element reduces flickering as it guarantees that each important edge remains visible during all neighbouring frames. After morphological filtering that comprises dilatation and/or erosion, remaining edge points are darkened, dilated and truncated to produce stylized edge features, before they are applied to the video textures.

In one embodiment, cartoonizing further comprises edge highlighting, which may comprise detecting temporal correspondence between a current image frame and an adjacent image frame, spatio-temporally filtering the current image frame by help of the adjacent image frames, detecting edges in the filtered image frame and glorifying the edges in the filtered image frame.

In one embodiment, the spatio-temporally filtering may comprise filtering the current image frame spatially by help of a first Gaussian filter with a spatial Gaussian filter weight, and filtering the spatially filtered image frame temporally by help of a second Gaussian filter with a temporal Gaussian filter weight, wherein temporal filtering and spatial filtering are separated. This smoothes the image frame sequence which also helps prevention of flickering.

In one embodiment, glorifying the edges in a current image frame comprises applying morphological operators in the spatial domain and/or in the temporal domain.

In one embodiment, spatial diffusion based on an inverted Gaussian spatial bilateral filter is applied to the edge highlighted image frame. The inverted-Gaussian-spatial bilateral filter, which uses inverted-Gaussian function as the kernel of spatial filter, can remove small spots in large smooth area more efficiently, which is important e.g. in the context of real time visual telecommunication.

In one embodiment, spatial diffusion based on a mean shift modification is applied to the edge highlighted image frame. Mean shift modification enhances the cartoon-like effect described above.

It will be understood that the present invention has been described purely by way of example, and modifications of detail can be made without departing from the scope of the invention. Each feature disclosed in the description and (where appropriate) the claims and drawings may be provided independently or in any appropriate combination. Features may, where appropriate be implemented in hardware, software, or a combination of the two. Connections may, where applicable, be implemented as wireless connections or wired, not necessarily direct or dedicated, connections. Reference numerals appearing in the claims are by way of illustration only and shall have no limiting effect on the scope of the claims.

## Claims

1. A method for processing video data, wherein the video data are cartoonized, comprising the steps of
- edge processing a received image; and
- overlaying the edge processed image to the received image.

2. Method according to claim 1, further comprising the step of determining a feature map of the received video image, wherein the step of edge processing is performed under guidance of the feature map.

3. Method according to claim 2, wherein determining the feature map comprises determining a saliency map, determining a skin-colour map, and combining the saliency map and the skin-colour map in order to detect edges that are salient and/or limit regions of interest.

4. Method according to claim 2 or 3, wherein cartoonization further comprises abstracting the input image and quantizing a combined image under guidance of the feature map, wherein edge processing is used.

5. A video cartoonization device for processing video data, the device comprising
- processing means for edge processing a received image; and
- means for overlaying the edge processed image to the received image.

6. Device according to claim 5, further comprising
- means for determining a feature map of the received video image; and
- means for providing the determined feature map to said processing means for edge processing, which performs edge processing under guidance of the feature map.

7. Device according to claim 5, further comprising means for determining a saliency map, means for determining a skin-colour map, and means for combining the saliency map and the skin-colour map in order to detect edges that are salient and/or limit regions of interest.

8. Video monitoring system comprising a video cartoonization device according to claim 5, 6 or 7, further comprising presentation means (25) and an encoder (23).

9. Video monitoring system according to claim 8, further comprising storage means (24) for storing cartoonized video data.

10. Transmitter for transmitting video data, comprising
- input unit (11);
- pre-processing unit (12);
- video encoding unit (13); and
- transmitting unit (14),
wherein the pre-processing unit (12) comprises a video cartoonization device according to claim 5, 6 or 7.

11. Transmitter according to claim 10, wherein the transmitting unit transmits separately a stream of smoothed video images, wherein high-frequency components are suppressed, and a stream of edge information coming from said pre-processing unit.

12. Receiving device for receiving video data, comprising
- receiving unit (15);
- video decoding unit (15);
- pre-processing unit (60) comprising a video cartoonization unit according to claim 5, 6 or 7.

13. Receiving device according to claim 12, comprising means for receiving two separate streams, wherein a first stream comprises smoothed video images with high-frequency components being suppressed, and a second stream comprises edge information for processing in said pre-processing unit.

14. Receiving device according to claim 12 or 13, further comprising means for switching on or off said cartoonization unit, wherein switching off the cartoonization unit results in displaying natural video and switching on the cartoonization unit results in displaying cartoonized video.

15. Receiving device according to claim 12, 13, or 14, further comprising means for modifying one or more control parameters relating to said cartoonization unit, wherein the parameters control the degree of cartoonization.

16. Receiving device according to claim 15, wherein the means for modifying control parameters is controlled by user input.

17. Receiving device according to claim 15, wherein the means for modifying control parameters is automatically controlled by reception quality dependent parameters.

18. Network server comprising
- a receiving unit (53);
- a video cartoonization unit (55); and
- a broadcasting unit 54,
wherein the network server outputs encoded natural video and cartoonized video.
